Europäisches Patentamt

European Patent Office

Office européen des brevets

(19)

(11) Publication number: **0 107 353**
A2

(12) **EUROPEAN PATENT APPLICATION**

(21) Application number: **83305671.6**

(22) Date of filing: **23.09.83**

(51) Int. Cl.³: **B 01 D 23/10,** B 01 D 15/02

(30) Priority: **30.09.82 US 430883**

(71) Applicant: **ROBERTS FILTER CO OF CANADA LIMITED, Unit 31 2 Thorncliffe Park Drive, Toronto Ontario M4H 1H2 (CA)**

(43) Date of publication of application: **02.05.84 Bulletin 84/18**

(72) Inventor: **Roberts, Robert Lee, 409 Concord Road, Boothwyn Pennsylvania 19061 (US)**

(84) Designated Contracting States: **AT BE CH DE FR GB IT LI LU NL SE**

(74) Representative: **Shaw, Laurence, George House George Road, Edgbaston Birmingham B15 1PG (GB)**

(54) **Filter.**

(57) An upflow filter (10) in which a liquid influent (eg. water) is directed upwardly through buoyant filter balls (14) below a screen roof (15), preferably with openings larger than the nominal size of the balls. A layer of particulate material (20) e.g. gravel is positioned on the screen and has a nominal particle size greater than screen openings. This layer of particulate material (20) retains the buoyant balls (14) in the filter and acts as a filter medium.

ROBERTS FILTER CO        1        0107353

OF CANADA LIMITED        Agents Ref: 1089

FILTER

This invention relates generally to a liquid filter, especially an adsorption filter or clarifier adapted for use in the treatment of water or waste water. In particular, this invention offers an improved filter of the type including a filter bed or medium containing buoyant balls, usually plastic. Such filters may be an upflow filter, eg. a combination adsorption-gravity filter or the like. These filters usually operate in an upflow mode, with the influent being directed upwardly through the buoyant balls which are housed in a box having a fine screen as a roof. Flushing or backwashing can take place by directing wash water downwardly through the buoyant medium or by directing air and water upwardly through the buoyant medium.

It is one object of this invention to provide an improved filter having a filter bed comprising buoyant balls and having better filtering properties. It is another object to provide a filter having an extended life before the filter becomes clogged. It is yet another object to provide a filter in which it is easy to clean or replace a clogged filter.

According to one aspect of this invention there is provided a filter containing buoyant filter balls located in a box having a perforate roof characterised in that the roof comprises a screen having openings larger than the nominal size of the balls, and in that a particulate material having a nominal size greater than the screen openings is present on the screen to return the balls in the box.
The terms "nominal particle size" or "nominal size" mean the approximate size of the particles as determined by sieve analysis (eg. U.S. or Tyler sieves). When referring to the buoyant balls, the "nominal particle size" is synonymous with the "effective particle size".

The particulate material positioned above the screen is preferably sand, gravel or the like and is employed to prevent the escape of the buoyant balls from the filter box. The screen is not capable of providing this function because the screen openings are too large and so the screen is a support for the particulate material.

0107353

The screen openings are at least about 150% larger than the nominal size of the buoyant balls, but no greater than about 90% of the nominal size of the particles. In a most preferred arrangement the nominal size of the particles is at least twice the nominal size of the buoyant balls. Preferably the buoyant balls comprises plastic balls, preferably formed of expanded, polymerized alkenes, such as polystyrene.

This invention is seen to good advantage in adsorption filters or clarifiers which employ an upflow flushing cycle, such as is used in the "Trident" system, or a gravity flow back-washing cycle, such as is disclosed in U.S. patent 4208281A. When air is used in flushing such as in the Trident system, it will tend to disturb the particulate material layer on the screen. To prevent this from harming the filter the invention includes a modification in which a second screen is located on top of the layer of particulate material. The second screen may be connected to the lower screen eg. by bolts or wire ties.

In order that the invention may be well understood it will now be described by way of example with reference to the accompanying drawings, in which:

Figure 1 is a schematic section of one embodiment of this invention;

Figure 2 is an enlarged view of the circled section of Figure 1 identified by the numeral "2"; and

Figure 3 is an enlarged, fragmentary view of another embodiment of the invention.

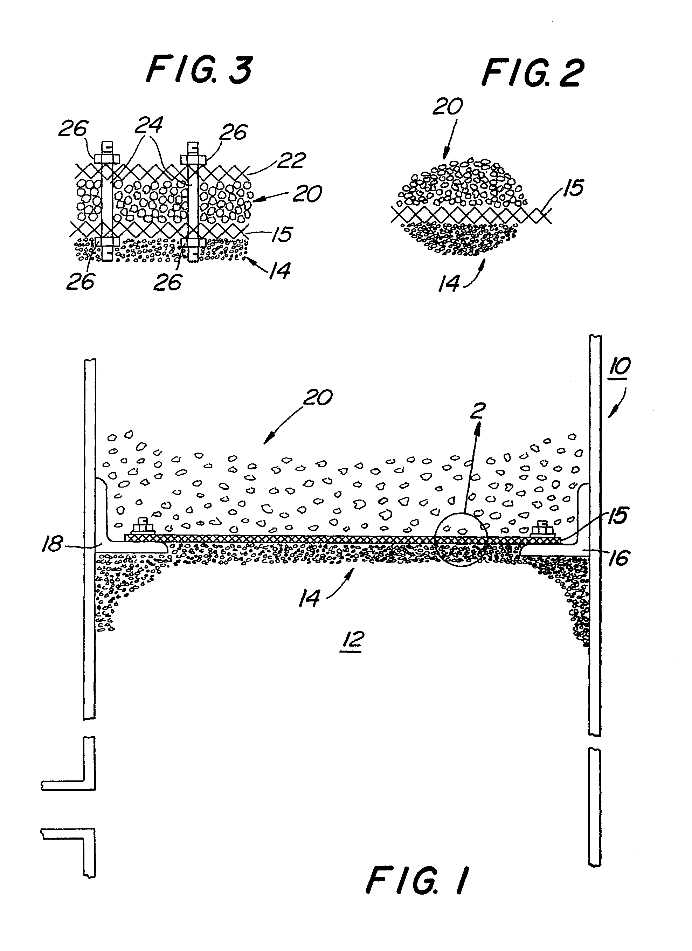

The upflow adsorption filter or clarifier 10 of Figures 1 and 2 includes a box 12 housing filtering buoyant plastic balls 14 having a nominal or effective particle size of 1 or 2 millimetres, and eg. plastic particles of the type disclosed in U.S. patent No. 4 208 281A.

The balls 14 may be coated with an active material, such as activated carbon, which may instead or in addition be introduced directly into the influent prior to passing the influent through the filter.

A perforate supporting screen 15 overlies the buoyant balls 14 and is bolted directly to flanges 16 and 18 secured to sidewalls of the filter. According to this invention, the openings in the screen 15 are larger than the nominal size of the buoyant balls 14, preferably by at least 150% (Figure 2).

0107353

A particulate material 20, preferably gravel, either in the form of a single course or graded layer is present on the screen.  The gravel particles are selected and arranged such that the gravel particles adjacent to the screen 15 have a nominal size greater than the size of the screen openings. Gravel having a nominal size of 3/16 inch by 1/10 inch, (4.5 mm by 2.5 mm) as defined by American Water Works Association Standard B 100-72, is preferred.  Most preferably, the size of the openings in the screen is no greater than 90% of the nominal size of the particles.  The layer of gravel 20 should be sufficiently deep to prevent the balls from passing through even if slight lateral displacement of the gravel in the layer should take place during the filtering operation.  A depth of at least about 15 cm is preferred. The nominal size of the gravel particles is at least twice that of the buoyant balls.

The particulate material 20 is arranged to act as the upper support or retaining means for the underlying buoyant balls 14 leaving the screen 15 to function solely as the gravel support.  Because the openings in the screen are larger than the nominal size of the buoyant balls 14, the screen cannot perform this function.  The gravel layer inherently has many interstices or passages through which upflow filtering can take place over a long time before excessive clogging of passages takes place.

Because the openings through the screen are large, they do not tend to become clogged during filtering. Because the screen does not tend to become clogged, only the relatively inexpensive gravel needs to be replaced if the filter becomes clogged.

During air-water flushing or the like the gravel may move. Figure 3 shows an embodiment for preventing excessive shifting of the particulate material. A second screen 22 overlies the layer of particulate material 20 and is retained in this position by bolts 24 and nuts 26 which extend through openings in the screens 15 and 22. In this embodiment of the invention, the openings in the screen 22 preferably are smaller than the nominal size of the adjacent particulate material, and can be substantially the same size as the openings in screen 15.

CLAIMS

1. A filter containing buoyant filter balls located in a box having a perforate roof characterised in that the roof comprises a screen having openings larger than the nominal size of the balls, and in that particulate material having a nominal size greater than the screen openings is present on the screen to retain the balls in the box.

2. A filter according to Claim 1 characterised in that the screen openings are at least about 150% larger than the nominal size of the buoyant balls, but no greater than about 90% of the nominal size of the particles.

3. A filter according to Claim 1 or 2 characterised in that the nominal size of the particles is at least twice the nominal size of the buoyant balls.

4. A filter according to any preceding Claim characterised in that the particulate material is present in a layer at

0107353

least 15 cm deep.

5.   A filter according to any preceding Claim characterised in that the particulate material is sand or gravel.

6.   A filter according to any preceding Claim characterised in that the filter is an adsorption filter or clarifier.

7.   A filter according to any preceding Claim characterised in that a second perforate screen is located on the layer of particulate material.

8.   A filter according to Claim 7 characterised in that the openings in the second screen are substantially the same size as in the first screen.

FIG. 3

FIG. 2

FIG. 1

0107353

1/1